# FASCICULE DE BREVET EUROPEEN

(11) **EP 0 675 989 B1**
(45) Date de publication et mention de la délivrance du brevet: **17.06.1998**
(21) Numéro de dépôt: 94902837.7
(22) Date de dépôt: 20.12.1993
(51) Int. Cl.: E04B 2/72, E06B 9/04, F16B 5/06, E04B 1/61

(54) **DISPOSITIF D'ASSEMBLAGE DE DEUX PROFILES ET PROFILES A PROFIL MALE ET/OU FEMELLE**
VORRICHTUNG ZUR VERBINDUNG VON ZWEI PROFILEN UND MÄNNLICHE UND/ODER WEIBLICHE PROFILE
DEVICE FOR ASSEMBLING TWO PROFILED SECTIONS AND PROFILED SECTIONS WITH A MALE AND/OR FEMALE PROFILE

(30) Priorité: 18.12.1992 FR 9215681
(43) Date de publication de la demande: 11.10.1995
(73) Titulaire: COLOMBO, Daniel, F-38590 Saint-Etienne-de-Saint-Geoirs (FR)
(72) Inventeur: COLOMBO, Daniel, F-38590 Saint-Etienne-de-Saint-Geoirs (FR)
(74) Mandataire: Casalonga, Axel
(86) Numéro de dépôt international: FR9301271
(87) Numéro de publication internationale: WO9415035

(56) Documents cités:
- EP-A- 0 006 431
- DE-A- 2 701 905
- FR-A- 1 497 184
- FR-A- 1 571 961
- FR-A- 2 119 551
- GB-A- 614 394
- GB-A- 2 168 732
- US-A- 3 683 576
- US-A- 4 830 080

## Description

La présente invention concerne un dispositif d'assemblage de profilés en particulier dans le but de réaliser des panneaux.

Un accouplement de profilés, connu par le brevet FR-A-1 571 961, comprend un système de tenon-mortaise intérieur et un système de tenon-mortaise extérieur. L'un des inconvénients de cet accouplement réside dans le fait que lorsque les forces d'appui dans l'un des systèmes de tenon-mortaise augmentent, les forces d'appui dans l'autre système de tenon-mortaise diminuent.

De nombreux autres assemblages connus de profilés consistent à accoupler chacun des profilés par un système de tenon-mortaise qui présentent des parties s'accouplant par insertion axiale forcée par dessus et au-delà d'épaulements de maintien. C'est le cas en particulier dans les brevets FR-A-2 119 551, US-A-4 830 080, DE-A-2 701 905 et EP-A-0 006 431.

Par ailleurs, pour la réalisation de panneaux à partir de profilés s'emboîtant les uns dans les autres, notamment de volets ou de cloisons, on doit actuellement, dans un premier temps, emmancher manuellement les unes dans les autres les parties mâle et femelle des profilés et, dans un second temps, procéder au serrage et à la réalisation finale de l'assemblage. Dans la mesure où on dispose d'une presse automatique, il est indispensable de surveiller si les profilés s'emboîtent bien les uns dans les autres. Par ailleurs, quand les panneaux sont réalisés, on a pu constater que les profilés peuvent prendre du jeu entre eux notamment à cause des variations de température de telle sorte qu'il apparaît des bruits sous l'effet des vibrations ou sous les effets du vent ou des courants d'air.

La présente invention a notamment pour but de simplifier les opérations d'assemblage de profilés et de limiter voire supprimer le jeu précité.

La présente invention a pour objet un dispositif d'assemblage par emboîtement de deux profilés qui comprennent, respectivement, des parties latérales opposées formant un profil mâle et un profil femelle s'emboîtant l'un dans l'autre, dans lequel le profilé à profil femelle comprend une paire de pattes qui s'étendent vers l'intérieur et le profilé à profil mâle comprend une paire de pattes qui s'étendent vers l'avant. Ces paires de pattes formant une partie mâle et une partie femelle s'emboîtent l'une dans l'autre et glissent l'une sur l'autre pour, lors de l'emboitement, amener en appui lesdites parties opposées des profils mâle et femelle précités les unes sur les autres.

Selon l'invention, lesdites parties latérales opposées du profilé à profil femelle présentent des parties terminales qui, avant emboîtement, vont en s'évasant et sont reliées aux pattes de ce profilé à profil femelle, et que les pattes du profilé à profil mâle présentent des faces opposées de glissement, inclinées par rapport à la direction d'emboîtement vers le plan médian du profilé, à une inclinaison telle que, lors de l'emboîtement, d'une part la paire de pattes et les parties terminales du profilé à profil femelle et d'autre part la paire de pattes et les parties latérales du profilé à profil mâle s'engagent avec jeu respectivement les unes dans les autres et qu'ensuite les pattes du profilé à profil femelle et celles du profilé à profil mâle viennent respectivement en contact et glissent respectivement les unes sur les autres en produisant tout d'abord un rapprochement réciproque des parties terminales du profil femelle et des parties latérales du profil mâle puis un effet de pincement ou de serrage des parties latérales opposées du profil mâle entre les parties terminales opposées du profil femelle.

Selon l'invention, les pattes du profilé à profil femelle sont de préférence inclinées vers l'arrière par rapport à la direction d'emboîtement.

Selon l'invention, lesdites parties latérales du profilé à profil femelle comprennent de préférence des branches latérales qui présentent lesdites parties terminales, ces parties terminales portant les pattes de ce profilé.

Selon l'invention, lesdites branches latérales présentent de préférence, en arrière desdites pattes, des zones longitudinales d'affaiblissement.

Selon l'invention, le profilé à profil mâle comprend de préférence une paroi transversale d'extrémité qui, avant emboîtement, est bombée vers l'avant et est munie de pattes longitudinales en saillie vers l'avant situées à distance des bords longitudinaux de cette paroi.

Selon l'invention, la paroi transversale précitée présente de préférence au moins une zone longitudinale d'affaiblissement, de préférence une zone longitudinale d'affaiblissement dans sa partie médiane et des zones longitudinales d'affaiblissement au voisinage de ses bords longitudinaux.

Selon l'invention, la paroi transversale du profilé à profil femelle comprend de préférence des bossages en saillie vers l'avant qui constituent des butées latérales pour les extrémités des pattes du profilé à profil mâle.

Selon l'invention, lesdites faces de glissement des pattes du profilé à profil mâle présentent de préférence, des rainures longitudinales.

Selon l'invention, de préférence, lesdites paires de pattes s'engagent l'une dans l'autre avant que lesdits profils mâle ou femelle s'engagent l'un dans l'autre..

La présente invention a également pour objet un profilé emboîtable comprenant un profil mâle de section en forme de U qui présente deux parties latérales opposées susceptibles de s'engager dans un profil femelle d'un autre profilé et une paroi transversale d'extrémité qui est munie de deux pattes longitudinales en saillie vers l'avant situées à distance des bords longitudinaux de cette paroi transversale et sur lesquelles des parties dudit autre profilé sont susceptibles de prendre appui.

Selon l'inveniton, lesdites pattes à profil mâle dudit profilé emboîtable présentent des faces latérales qui sont inclinées par rapport à la direction d'emboitement, vers le plan médian dudit profilé à profil mâle, la paroi transversale précitée étant bombée vers l'avant et présentant des zones longitudinales d'affaiblissement, de préférence une zone longitudinale d'affaiblissement dans sa partie médiane et des zones longitudinales d'affaiblissement au voisinage de ses bords longitudinaux. Selon l'invention, lesdites faces présentent des rainures longitudinales.

La présente invention a également pour objet un profilé emboîtable qui comprend un profil femelle de section en forme de U, les parties latérales de ce profil étant destinées à recevoir en elles un profil mâle d'un autre profilé et étant munies intérieurement de pattes longitudinales en saillie vers l'intérieur qui sont susceptibles de prendre appui sur des surfaces dudit autre profilé.

Selon l'invention, lesdites parties latérales dudit profilé emboîtable à profil femelle comprennent des branches latérales dont les parties terminales sont évasées et sont destinées à recevoir entre elles ledit profil mâle, ces parties terminales portant lesdites pattes et lesdites branches latérales présentant une zone longitudinale d'affaiblissement située en arrière desdites pattes.

Selon l'invention, lesdites pattes longitudinales sont de préférence, inclinées en direction de la paroi transversale du profil femelle précité.

Selon l'invention, la paroi transversale dudit profil femelle comprend de préférence des bossages d'appui en saillie vers l'avant, de part et d'autre desquels des parties dudit autre profilé peuvent s'étendre.

La présente invention sera mieux comprise à l'étude d'un dispositif d'assemblage de deux profilés, décrit à titre d'exemple non limitatif et illustré par le dessin sur lequel :
- la figure 1 montre en coupe transversale les profilés avant leur emboitement;
- et la figure 2 représente en coupe transversale les profilés en position assemblée.

Le dispositif d'assemblage représenté sur les figures et repéré d'une manière générale par la référence 1 permet d'assembler un profilé 2 sur un profilé 3, qui sont par exemple en aluminium ou en matière plastique,

Le profilé 2 présente, symétriquement à son plan médian, deux parois latérales opposées et parallèles 4 et 5 et un profil femelle d'extrémité 6 de section en forme de U qui présente deux branches latérales 7 et 8 qui s'étendent dans le prolongement des parois latérales 4 et 5 et une paroi transversale 9 qui s'étend perpendiculairement aux parois latérales 4 et 5.

Le profilé 3 comprend deux parois latérales et parallèles 10 et 11 qui correspondent aux parois latérales 4 et 5 du profilé 2, ainsi qu'un profil mâle d'extrémité 12. Ce profilé mâle 12 comprend deux branches latérales 13 et 14 qui prolongent les parois latérales 10 et 11 mais qui sont décalées vers l'intérieur de manière à ménager deux épaulements 15 et 16, ainsi qu'une paroi transversale d'extrémité 17.

Les branches 13 et 14 du profil mâle 12 du profilé 3 sont destinées à recevoir par l'extérieur les parties terminales 18 et 19 des branches latérales 7 et 8 du profil femelle 6 du profilé 2, leur bord d'extrémité 20 et 21 pouvant venir en butée contre les épaulements 15 et 16.

La paroi transversale 17 du profil mâle 12 du profilé 3 est légèrement bombée vers l'extérieur de telle sorte que les parties des parois latérales 10 et 11 du profilé 3 adjacentes aux branches 13 et 14 et ces dernières sont légèrement rapprochées.

Le profilé 2 est équipé de parties de serrage qui sont constituées dans l'exemple par deux pattes longitudinales 22 et 23 symétriques par rapport à son plan médian. Ces pattes longitudinales 22 et 23 sont portées par les branches 7 et 8 du profil femelle 6 et s'étendent à l'intérieur de ce dernier. Les pieds 24 et 25 de ces pattes longitudinales 22 et 23 sont situés légèrement en arrière des parties terminales 18 et 19. Ces pattes sont inclinées vers l'arrière en direction de la paroi transversale 9, dans l'exemple sensiblement à 45°.

En arrière des pattes 22 et 23, les branches 7 et 8 du profil femelle 6 du profilé 2 présentent, sur leurs faces internes, des zones longitudinales d'affaiblissement formées par des gorges longitudinales 26 et 27. Dans l'exemple, ces branches 7 et 8 vont légèrement en s'évasant à partir de ces gorges 26 et 27.

Le profilé 3 est équipé de parties de serrage qui sont constituées dans l'exemple par deux pattes longitudinales 28 et 29 qui s'étendent en saillie vers l'avant et symétriquement par rapport à son plan médian. Ces pattes 28 et 29 sont portées par la paroi transversale 17 du profil mâle 12 et sont situées à distance des bords longitudinaux de cette paroi transversale 17.

Ces pattes longitudinales 28 et 29 présentent des faces latérales 30 et 31 qui sont inclinées de quelques degrés vers le plan médian du profilé 3 et qui présentent de rainure longitudinales peu profondes.

La paroi transversale 17 du profil mâle 12 du profilé 3 présente en outre des zones longitudinales d'affaiblissement obtenues par des gorges longitudinales 32 et 33 situées au voisinage de ses bords longitudinaux extérieurs et une zone longitudinale d'affaiblissement obtenue grâce à une gorge longitudinale 34 située dans la partie médiane de la face intérieure de la paroi transversale 17.

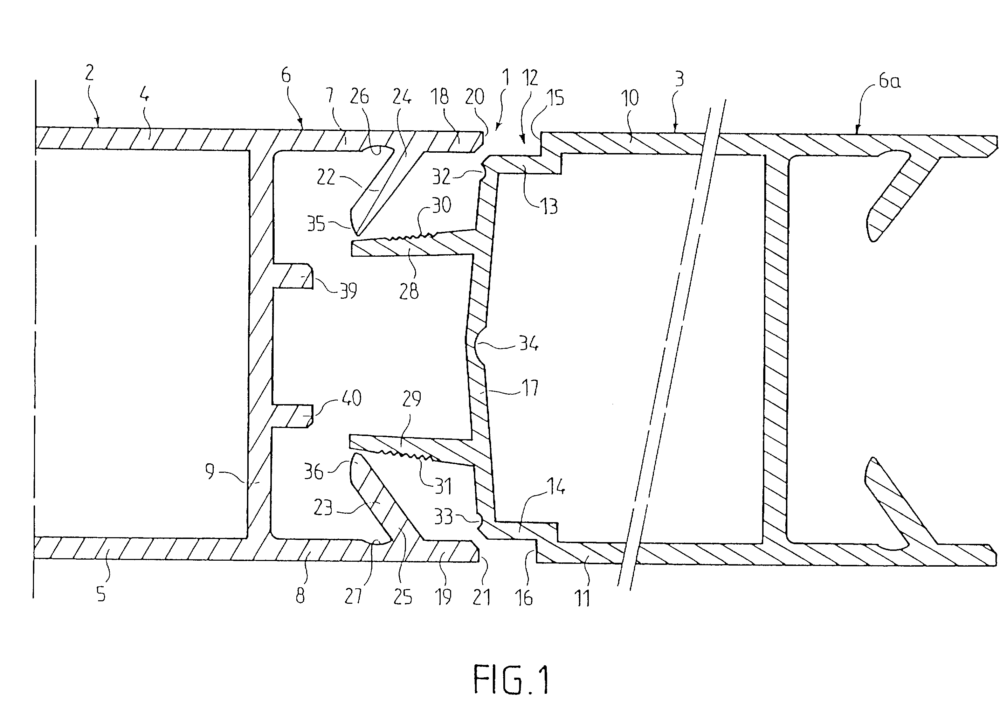

Comme on le voit sur la figure 1, la distance entre les bords longitudinaux d'extrémité 37 et 38 des patttes 22 et 23 est légèrement supérieure à la distance séparant les parties terminales des surfaces latérales 30 et 31 des pattes longitudinales 28 et 29.

L'assemblage par emboitement des profilés 2 et 3 peut être obtenu de la manière suivante.

Le profil femelle 6 du profilé 2 étant en face du profil mâle 12 du profilé 3 comme me montre la figure 1, on déplace ces profilés 2 et 3 l'un vers l'autre.

Tout d'abord, les parties longitudinales d'extrémité des pattes longitudinales 28 et 29 du profilé 3 s'engagent avec jeu entre les bords longitudinaux d'extrémité 35 et 36 des pattes longitudinales 22 et 23 du profilé 2.

Ensuite, les parties terminales 18 et 19 du profil femelle 6 du profilé 2 s'engagent avec jeu au-dessus des branches latérales 13 et 14 du profil mâle 12 du profilé 3.

Puis, les bords longitudinaux d'extrémité 35 et 36 des pattes longitudinales 22 et 23 du profilé 2 viennent en contact avec les pattes longitudinales 28 et 29 du profilé 3.

On exerce alors un effort de manière à rapprocher les profilés 2 et 3 l'un de l'autre. Se faisant, les bords d'extrémité longitudinaux 35 et 36 des pattes 22 et 23 glissent sur les surfaces inclinées 30 et 31 des pattes longitudinales 28 et 29. Il se produit alors, jusqu'à ce que les bords d'extrémité 20 et 21 du profilé 2 viennent en butée contre les épaulements 15 et 16 du profilé 3, un rapprochement réciproque des parties terminales 18 et 19 du profil femelle 6 du profilé 2 et des branches latérales 13 et 14 du profil mâle 12 du profilé 3, puis un effet de pincement ou de serrage de ce profil mâle 12 dans le profil femelle 6.

Ces effets sont obtenus par rotation ou déformation des pattes longitudinales 22 et 23 du profilé 2 et par rotation ou déformation des pattes longitudinales 28 et 29 du profilé 3, engendrant un rapprochement des parties terminales des branches 7 et 8 du profil femelle 6 et le redressement partiel de la paroi transversale bombée 17 du profil mâle 12. Il est en effet souhaitable que la paroi transversale 17 ne se redresse pas totalement afin de maintenir l'effet de pincement précité et d'éviter qu'elle se déforme au-delà de sa position droite et anéantisse cet effet de pincement.

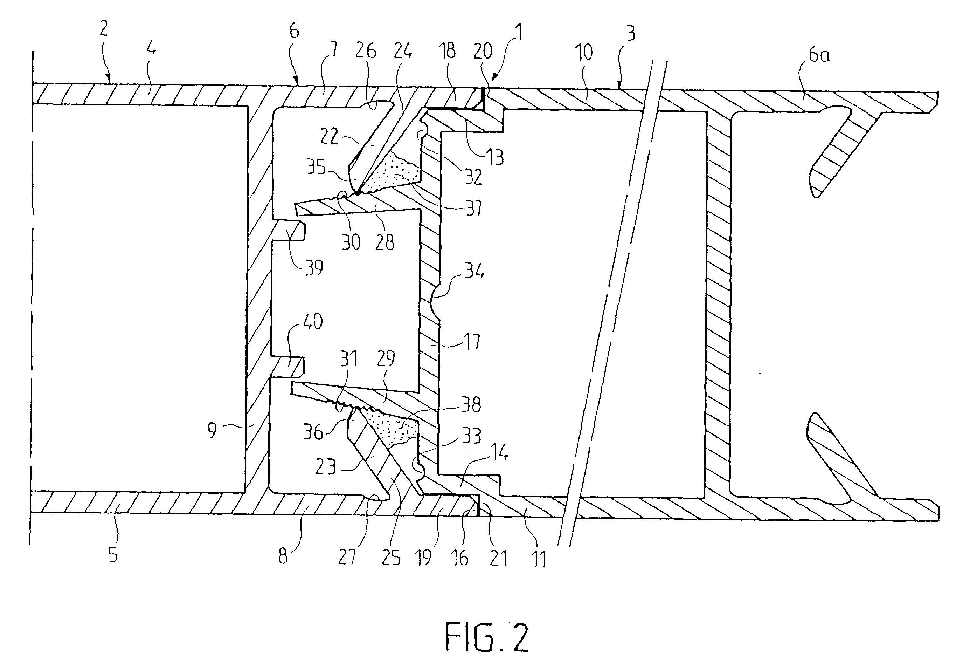

On atteint alors la position emboitée représentée sur la figure 2. Dans cette position emboitée, les faces extérieures du panneau ainsi obtenu à l'aide des profilés 2 et 3 sont plates.

Si, avant de procéder à l'assemblage ci-dessus, on a pris la précaution d'enduire les faces 30 et 31 des pattes 28 et 29 du profilé 3 d'une pâte à joint, cette pâte se trouve râclée par un effet de truelle par les pattes 22 et 23 du profilé 2 lors de l'assemblage. Il se forme alors, comme le montre la figure 2, des bourrelets longitudinaux 37 et 38 de pâte à joint dans l'espace séparant les pattes 22, 28 et 23, 29. La pâte à joint peut être choisie de telle sorte que les bourrelets 37 et 38 constituent des joints d'étanchéité et coupe-feu.

Comme on peut le voir sur les figures, la paroi transversale 9 du profilé 2 porte deux bossages 39 et 40 en saillie vers l'avant qui s'étendent entre les extrémités des pattes 28 et 29 et à faible distance de ces dernières lorsque les profilés 2 et 3 sont assemblés. Ainsi, en cas d'efforts contre l'une des parois latérales des profilés 2 et 3, les extrémités des pattes 28 et 29 peuvent venir prendre appui sur ces bossages 39 et 40. La résistance de l'assemblage se trouve ainsi accrue.

Comme le montre les figures en exemple, le profilé 3 est équipé, à l'opposé de son profil mâle 12 d'un profil femelle 6a identique au profil 6 du profilé 2. Ce profilé 3 peut ainsi être utilisé pour réaliser un panneau à plusieurs profilés munis de profils d'extrémité mâle et femelle correspondant à ceux décrits précédemment.

Le dispositif d'assemblage 1 qui vient d'être décrit présente de nombreux avantages. En particulier, il permet de former des panneaux à l'aide de machines de serrage automatiques. Pour cela, il suffit de déposer sur un banc plat, les uns à côté des autres, des profilés et d'actionner les moyens de serrage. Les dispositions décrites précédemment des pattes longitudinales 22 et 23 et des pattes longitudinales 28 et 29 assurent un autocentrage des profilés les uns par rapport aux autres par rapport à la direction de leur emboitement. Lorsque l'emboitement est terminé, les profilés sont solidemment maintenus les uns aux autres par les effets de pincement et de frottement décrits précédemment. Ces effets de pincement et de frottement empêchent toute création de jeu entre deux panneaux, même lors de variations de température ou de conditions d'utilisation.

La présente invention ne se limite pas à l'exemple ci-dessus décrit. Bien des variantes de réalisation sont possibles sans sortir du cadre défini par les revendications annexées.

## Revendications

1. Dispositif d'assemblage par emboîtement de deux profilés (2, 3) qui comprennent, respectivement, des parties latérales opposées formant un profil mâle (12) et un profil femelle (6) s'emboîtant l'un dans l'autre, le profilé à profil femelle comprenant une paire de pattes qui s'étendent vers l'intérieur et le profilé à profil mâle comprenant une paire de pattes qui s'étendent vers l'avant, ces paires de pattes (22, 23 et 28, 29) formant une partie mâle et une partie femelle s'emboîtant l'une dans l'autre et glissant l'une sur l'autre pour, lors de l'emboîtement, amener en appui lesdites parties opposées des profils mâle et femelle précités les unes sur les autres, caractérisé par le fait que lesdites parties latérales opposées (7, 8) du profilé à profil femelle (6) présentent des parties terminales (18, 19) qui, avant emboîtement, vont en s'évasant et sont reliées aux pattes (22, 23) de ce profilé à profil femelle (6), et que les pattes (28, 29) du profilé à profil mâle (12) présentent des faces opposées de glissement (30, 31), inclinées par rapport à la direction d'emboîtement vers le plan médian du profilé, à une inclinaison telle que, lors de l'emboîtement, d'une part la paire de pattes (22, 23) et les parties terminales (18, 19) du profilé à profil femelle (6) et d'autre part la paire de pattes (28, 29) et les parties latérales (13, 14) du profilé à profil mâle (12) s'engagent avec jeu respectivement les unes dans les autres et qu'ensuite les pattes (22, 23) du profilé à profil femelle (6) et celles (28, 29) du profilé à profil mâle (12) viennent respectivement en contact et glissent respectivement les unes sur les autres en produisant tout d'abord un rapprochement réciproque des parties terminales (18, 19) du profil femelle (6) et des parties latérales (13, 14) du profil mâle (12) puis un effet de pincement ou de serrage des parties latérales opposées (13, 14) du profil mâle (12) entre les parties terminales opposées (18, 19) du profil femelle (6).

2. Dispositif d'assemblage selon la revendication 1, caractérisé par le fait que les pattes (22, 23) du profilé à profil femelle (6) sont inclinées vers l'arrière par rapport à la direction d'emboîtement.

3. Dispositif d'assemblage selon l'une des revendications 1 et 2, caractérisé par le fait que lesdites parties latérales du profilé à profil femelle (6) comprennent des branches latérales (7, 8) qui présentent lesdites parties terminales (18, 19), ces parties terminales portant les pattes (22, 23) de ce profilé.

4. Dispositif d'assemblage selon la revendication 3, caractérisé par le fait que lesdites branches latérales (7, 8) présentent, en arrière desdites pattes (22, 23), des zones longitudinales d'affaiblissement (26, 27).

5. Dispositif d'assemblage selon l'une quelconque des revendications précédentes, caractérisé par le fait que le profilé à profil mâle (12) comprend une paroi transversale d'extrémité (17) qui, avant emboîtement, est bombée vers l'avant et est munie de pattes longitudinales (28, 29) en saillie vers l'avant situées à distance des bords longitudinaux de cette paroi.

6. Dispositif d'assemblage selon la revendication 5, caractérisé par le fait que la paroi transversale précitée (17) présente au moins une zone longitudinale d'affaiblissement, de préférence une zone longitudinale d'affaiblissement (34) dans sa partie médiane et des zones longitudinales d'affaiblissement (32, 33) au voisinage de ses bords longitudinaux.

7. Dispositif d'assemblage selon l'une quelconque des revendications précédentes, caractérisé par le fait que la paroi transversale (9) du profilé à profil femelle (6) comprend des bossages (39, 40) en saillie vers l'avant qui constituent des butées latérales pour les extrémités des pattes (28, 29) du profilé à profil mâle (12).

8. Dispositif d'assemblage selon l'une quelconque des revendications précédentes, caractérisé par le fait que lesdites faces de glissement (30, 31) des pattes (28, 29) du profilé à profil mâle (12) présentent des rainures longitudinales.

9. Dispositif d'assemblage selon l'une quelconque des revendications précédentes, caractérisé par le fait que lesdites paires de pattes (22, 23 et 28, 29) s'engagent l'une dans l'autre avant que lesdits profils mâle et femelle (6, 12) s'engagent l'un dans l'autre.

10. Profilé emboîtable (3) comprenant un profil mâle (12) de section en forme de U qui présente deux parties latérales opposées (13, 14) susceptibles de s'engager dans un profil femelle (6) d'un autre profilé (2) et une paroi transversale d'extrémité (17) qui est munie de deux pattes longitudinales en saillie vers l'avant (28, 29) situées à distance des bords longitudinaux de cette paroi transversale (17) et sur lesquelles des parties (22, 23) dudit autre profilé (2) sont susceptibles de prendre appui, caractérisé par le fait que lesdites pattes présentent des faces latérales (30, 31) qui sont inclinées par rapport à la direction d'emboitement, vers le plan médian dudit profilé à profil mâle, la paroi transversale précitée (17) étant bombée vers l'avant et présentant des zones longitudinales d'affaiblissement, de préférence une zone longitudinale d'affaiblissement (34) dans sa partie médiane et des zones longitudinales d'affaiblissement (32, 33) au voisinage de ses bords longitudinaux.

11. Profilé selon la revendication 10, caractérisé par le fait que lesdites faces (30, 31) présentent des rainures longitudinales.

12. Profilé emboîtable (2) qui comprend un profil femelle (6) de section en forme de U, les parties latérales (7, 8) de ce profil étant destinées à recevoir en elles un profil mâle (12) d'un autre profilé (3) et étant munies intérieurement de pattes longitudinales en saillie vers l'intérieur (28, 29) qui sont susceptibles de prendre appui sur des surfaces (30, 31) dudit autre profilé (3), caractérisé par le fait que lesdites parties latérales comprennent des branches latérales (7, 8) dont les parties terminales (18, 19) sont évasées et sont destinées à recevoir entre elles ledit profil mâle (12), ces parties terminales portant lesdites pattes (22, 23) et lesdites branches latérales (7, 8) présentant une zone longitudinale d'affaiblissement (26, 27) située en arrière desdites pattes.

13. Profilé selon la revendication 12, caractérisé par le fait que lesdites pattes longitudinales (28, 29) sont inclinées en direction de la paroi transversale du profil femelle précité.

14. Profilé selon l'une des revendications 12 et 13, caractérisé par le fait que la paroi transversale (9) dudit profil femelle (6) comprend des bossages d'appui (39, 40) en saillie vers l'avant, de part et d'autre desquels des parties (28, 29) dudit autre profilé (3) peuvent s'étendre.

## Patentansprüche

1. Vorrichtung zur Einsteckverbindung von zwei Profilen (2, 3), die jeweils einander gegenüberliegende Seitenteile umfassen, welche eine Steckkontur (12) und eine Aufnahmekontur (6), die ineinandergesteckt werden, bilden, wobei das eine Aufnahmekontur aufweisende Profil ein Paar nach innen ragender Arme und das eine Steckkontur aufweisende Profil ein Paar nach vorne ragender Arme umfaßt, wobei diese einen Steckteil und einen Aufnahmeteil bildenden Armpaare (22, 23 und 28, 29) ineinandergesteckt werden und beim Einstecken aneinander gleiten, um die obengenannten einander gegenüberliegenden Steck- und Aufnahmekonturteile beim Einsteckvorgang zur Anlage aneinander zu führen, dadurch gekennzeichnet, daß die dem eine Aufnahmekontur (6) aufweisenden Profil gegenüberliegenden Seitenteile (7, 8) Endteile (18, 19) aufweisen, die vor der Einsteckverbindung aufgeweitet sind und mit den Armen (22, 23) dieses eine Aufnahmekontur (6) aufweisenden Profils verbunden werden, und daß die Arme (28, 29) des eine Steckkontur (12) aufweisenden Profils gegenüberliegende Gleitflächen (30, 31) aufweisen, die bezüglich der Einsteckrichtung zur mittleren Ebene des Profils derart geneigt sind, daß beim Einstecken einerseits das Armpaar (22, 23) und die Endteile (18, 19) des eine Aufnahmekontur (6) aufweisenden Profils und andererseits das Armpaar (28, 29) und die Seitenteile (13, 14) des eine Steckkontur (12) aufweisenden Profils jeweils mit Spiel ineinandergreifen und daß die Arme (22, 23) des eine Aufnahmekontur (6) aufweisenden Profils und die (28, 29) des eine Steckkontur (12) aufweisenden Profils danach jeweils in Kontakt kommen und jeweils aneinander gleiten, wodurch es zunächst zu einer gegenseitigen Annäherung der Endteile (18, 19) der Aufnahmekontur (6) und der Seitenteile (13, 14) der Steckkontur (12) kommt und dann eine Klemm- oder Preßwirkung der gegenüberliegenden Seitenteile (13, 14) der Steckkontur (12) zwischen den gegenüberliegenden Endteilen (18, 19) der Aufnahmekontur (6) bewirkt wird.

2. Verbindungavorrichtung nach Anspruch 1, dadurch gekennzeichnet, daß die Arme (22, 23) des eine Aufnahmekontur (6) aufweisenden Profils bezüglich der Einsteckrichtung nach hinten geneigt sind.

3. Verbindungsvorrichtung nach Anspruch 1 oder 2, dadurch gekennzeichnet, daß die Seitenteile des eine Aufnahmekontur (6) aufweisenden Profils die Endteile (18, 19) darstellende Seitenzweige (7, 8) umfassen, wobei diese Endteile die Arme (22, 23) dieses Profils tragen.

4. Verbindungsvorrichtung nach Anspruch 3, dadurch gekennzeichnet, daß die Seitenzweige (7, 8) hinter den Armen (22, 23) längliche Schwächungszonen (26, 27) aufweisen.

5. Verbindungsvorrichtung nach einem der vorhergehenden Ansprüche**,** dadurch gekennzeichnet, daß das eine Steckkontur (12) aufweisende Profil eine Endquerwand (17) umfaßt, die vor der Einsteckverbindung nach vorne gewölbt und mit nach vorne vorstehenden Längsarmen (28, 29) versehen ist, die in einem Abstand von den Längsrändern dieser Wand angeordnet sind.

6. Verbindungevorrichtung nach Anspruch 5, dadurch gekennzeichnet, daß die obengenannte Querwand (17) mindestens eine längliche Schwächungszone aufweist, und zwar vorzugsweise eine längliche Schwächungazone (34) in ihrem mittleren Teil und längliche Schwächungszonen (32, 33) in der Nähe ihrer Längsränder.

7. Verbindungsvorrichtung nach einem der vorhergehenden Ansprüche, dadurch gekennzeichnet, daß die Querwand (9) des eine Aufnahmekontur (6) aufweisenden Profils nach vorne vorstehende Nocken (39, 40), die Seitenanschläge für die Enden der Arme (28, 29) des eine Steckkontur (12) aufweisenden Profils bilden, umfaßt.

8. Verbindungevorrichtung nach einem der vorhergehenden Ansprüche, dadurch gekennzeichnet, daß die Gleitflächen (30, 31) der Arme (28, 29) des eine Steckkontur (12) aufweisenden Profils Längsnuten aufweisen.

9. Verbindungsvorrichtung nach einem der vorhergehenden Ansprüche, dadurch gekennzeichnet, daß die Armpaare (22, 23 und 28, 29) ineinandergreifen, bevor die Steck- und Aufnahmekonturen (6, 12) ineinandergreifen.

10. Einsteckprofil (3), das eine Steckkontur (12) mit U-förmigem Querschnitt umfaßt, die zwei einander gegenüberliegende Seitenteile (13, 14), die in eine Aufnahmekontur (6) eines anderen Profils (2) eingreifen können, und eine Endquerwand (17) aufweist, die mit zwei nach vorne vorstehenden Längsarmen (28, 29) versehen ist, die in einem Abstand von den Längerändern dieser Querwand (17) angeordnet sind und an denen Teile (22, 23) des anderen Profils (2) zur Anlage kommen können, dadurch gekennzeichnet, daß die Arme Seitenflächen (30, 31) aufweisen, die bezüglich der Einsteckrichtung zur mittleren Ebene des eine Steckkontur aufweisenden Profils geneigt sind, wobei die obengenannte Querwand (17) nach vorne gewölbt ist und längliche Schwächungszonen aufweist, vorzugsweise eine längliche Schwächungszone (34) in ihrem mittleren Teil und längliche Schwächungszonen (32, 33) in der Nähe ihrer Längsränder.

11. Profil nach Anspruch 10, dadurch gekennzeichnet, daß die Flächen (30, 31) Längsnuten aufweisen.

12. Einsteckprofil (2), das eine Aufnahmekontur (6) mit U-förmigem Querschnitt umfaßt, wobei die Seitenteile (7, 8) dieser Kontur zur Aufnahme einer Steckkontur (12) eines anderen Profils (3) darin bestimmt sind und innen mit nach innen vorstehenden Längsarmen (28, 29) versehen sind, die an die Flächen (30, 31) des anderen Profils (3) zur Anlage kommen können, dadurch gekennzeichnet, daß die Seitenteile Seitenzweige (7, 8) aufweisen, deren Endteile (18, 19) aufgeweitet und zur Aufnahme der Steckkontur (12) dazwischen bestimmt sind, wobei diese Endteile, die die Arme (22, 23) und die Seitenzweige (7, 8) tragen, eine sich hinter den Armen befindende längliche Schwächungszone (26, 27) aufweisen.

13. Profil nach Anspruch 12, dadurch gekennzeichnet, daß die Längsarme (28, 29) in Richtung der Querwand der obengenannten Aufnahmekontur geneigt sind.

14. Profil nach Anspruch 12 oder 13, dadurch gekennzeichnet, daß die Querwand (9) des Aufnahmeprofils (6) nach vorne vorstehende Stütznocken (39, 40) aufweist, auf deren beiden Seiten sich Teile (28, 29) des anderen Profils (3) erstrecken können.

## Claims

1. Aasembly system in which two sections (2, 3) that comprise respective opposing lateral parts forming a male profile (12) and a female profile (6) engage one inside the other, the section with the female profile comprising a pair of inwardly extending tongues and the section with the male profile comprising a pair of forward-extending tongues, these pairs of tongues (22, 23 and 28, 29) forming a male part and a female part that engage one inside the other and slide over each other such that the said opposing lateral parts of the abovementioned male and female profiles bear against each other upon engagement, which system is characterized in that the said opposing lateral parts (7, 8) of the section with the female profile (6) comprise end parts (18, 19) which, prior to engagement, widen out and are joined to the tongues (22, 23) of this section with the female profile (6), and in that the tongues (28, 29) of the section with the male profile (12) comprise opposing sliding faces (30, 31) that are inclined with respect to the direction of engagement towards the mid-plane of the section, at an angle such that, upon engagement, the pair of tongues (22, 23) and the end parts (18, 19) of the section with the female profile (6), on the one hand, and the pair of tongues (28, 29) and the lateral parts (13, 14) of the section with the male profile (12), on the other, engage with play in each other respectively, and such that the tongues (22, 23) of the section with the female profile (6) and those (28, 29) of the section with the male profile (12) then come into respective contact and slide respectively over each other, producing first of all a coming together of the end parts (18, 19) of the female profile (6) and the lateral parts (13, 14) of the male profile (12), and then a pinching or clamping of the opposing lateral parts (13, 14) of the male profile (12) between the opposing end parts (18, 19) of the female profile (6).

2. Assembly system according to Claim 1, characterized in that the tongues (22, 23) of the section with the female profile (6) are inclined backwards with respect to the direction of engagement.

3. Assembly system according to either of Claims 1 and 2, characterized in that the said lateral parts of the section with the female profile (6) include lateral arms (7, 8) that comprise the said end parts (18, 19), these end parts supporting the tongues (22, 23) of this section.

4. Assembly system according to Claim 3, characterized in that the said lateral arms (7, 8) comprise longitudinal zones of weakness (26, 27) to the rear of the said tongues (22, 23).

5. Assembly system according to any one of the preceding claims, characterized in that the section with the male profile (12) includes a transverse end wall (17) which, prior to engagement, bows forward and is provided with forward-projecting longitudinal tongues (28, 29) situated at a distance from the longitudinal edges of this wall.

6. Assembly system according to Claim 5, characterized in that the abovementioned transverse wall (17) contains at least one longitudinal zone of weakness, preferably one longitudinal zone of weakness (34) in its centre and other longitudinal zones of weakness (32, 33) towards its longitudinal edges.

7. Assembly system according to any one of the preceding claims, characterized in that the transverse wall (9) of the section with the female profile (6) comprises forward-projecting ridges (39, 40) constituting lateral guards for the ends of the tongues (28, 29) of the section with the male profile' (12).

8. Assembly system according to any one of the preceding claims, characterized in that the said sliding faces (30, 31) of the tongues (28, 29) of the section with the male profile (12) contain longitudinal grooves.

9. Assembly system according to any one of the preceding claims, characterized in that the said pairs of tongues (22, 23 and 28, 29) engage in each other before the said male and female profiles (6, 12) engage in each other.

10. Engageable section (3) comprising a U-sectioned male profile (12) having two opposing lateral parts (13, 14) capable of engagement in a female profile (6) of another section (2) and a transverse end wall (17) provided with two forward-projecting longitudinal tongues (28, 29) situated at a distance from the longitudinal edges of this transverse wall (17), on which tongues parts (22, 23) of the said other section (2) may bear, characterized in that the said tongues possess lateral faces (30, 31) that are inclined with respect to the direction of engagement, towards the mid-plane of the said section with the male profile, while the abovementioned transverse wall (17) bows forward and contains longitudinal zones of weakness, preferably one longitudinal zone of weakness (34) in its centre and other longitudinal zones of weakness (32, 33) towards its longitudinal edges.

11. Section according to Claim 10, characterized in that the said faces (30, 31) contain longitudinal grooves.

12. Engageable section (2) that comprises a U-sectioned female profile (6), the lateral parts (7, 8) of this profile being intended to accommodate inside themselves a male profile (12) of another section (3) and having internal inwardly projecting longitudinal tongues (22, 23) capable of bearing on surfaces (30, 31) belonging to the said other section (3), characterized in that the said lateral parts include lateral arms (7, 8) whose and parts (18, 19) are widened out and intended to accommodate the said male profils (12) between themselves, these end parts supporting the said tongues (22, 23) and the said lateral arms (7, 8) comprising a longitudinal zone of weakness (26, 27) situated to the rear of the said tongues.

13. section according to Claim 12, characterized in that the said longitudinal tongues (28, 29) are inclined towards the transverse wall of the abovementioned female profile.

14. Section according to either of Claims 12 and 13, characterized in that the transverse wall (9) of the said female profile (6) comprises forward-projecting retaining ridges (39, 40), to either side of which, parts (28, 29) of the said other section (3) can extend.
